(19) Europäisches Patentamt
European Patent Office
Office européen des brevets

(11) **EP 3 090 354 B1**

(12) **EUROPEAN PATENT SPECIFICATION**

(45) Date of publication and mention of the grant of the patent:
**19.09.2018 Bulletin 2018/38**

(21) Application number: **14875993.9**

(22) Date of filing: **29.12.2014**

(51) Int Cl.:
*G01D 21/00* (2006.01)          *G06F 3/05* (2006.01)
*G06F 13/24* (2006.01)          *G06F 1/14* (2006.01)
*G01P 15/00* (2006.01)

(86) International application number:
**PCT/US2014/072468**

(87) International publication number:
**WO 2015/103093 (09.07.2015 Gazette 2015/27)**

(54) **METHODS AND SYSTEMS FOR SYNCHRONIZING DATA RECEIVED FROM MULTIPLE SENSORS OF A DEVICE**

VERFAHREN UND SYSTEME ZUR SYNCHRONISIERUNG VON AUS MEHREREN SENSOREN EINER VORRICHTUNG EMPFANGENEN DATEN

PROCÉDÉS ET SYSTÈMES DESTINÉS À UNE SYNCHRONISATION DES DONNÉES REÇUES À PARTIR DE MULTIPLES CAPTEURS D'UN DISPOSITIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.12.2013 US 201314143038**

(43) Date of publication of application:
**09.11.2016 Bulletin 2016/45**

(73) Proprietor: **Google Technology Holdings LLC**
**Mountain View, CA 94043 (US)**

(72) Inventors:
• **HESCH, Joel**
  **Mountain Veiw, CA 94043 (US)**
• **FUNG, James**
  **Mountain Veiw, CA 94043 (US)**
• **LEE, Johnny**
  **Mountain Veiw, CA 94043 (US)**

(74) Representative: **Betten & Resch**
**Patent- und Rechtsanwälte PartGmbB**
**Maximiliansplatz 14**
**80333 München (DE)**

(56) References cited:
US-A- 5 600 576          US-A1- 2008 309 774
US-A1- 2011 035 187      US-A1- 2012 163 520
US-A1- 2013 176 453      US-A1- 2013 268 199
US-A1- 2013 286 242

## Description

BACKGROUND

Unless otherwise indicated herein, the materials described in this section are not prior art to the claims in this application and are not admitted to be prior art by inclusion in this section.

Sensor fusion includes combining sensor data or data derived from sensory data from independent sources such that resulting information is more complete. Data sources for a fusion process may include multiple distinct sensors. Each sensor may provide different information about the same object in an environment, or about the same location in an environment, for example. By combining the sensor data, a more complete depiction of the object or location can be provided. As an example, one sensor may include a camera to capture an image of an object, and another sensor may include location detection capabilities to determine a location of a device used to capture the image. By combining the sensor data, specific location information for the image data is provided.

US5600576 discloses a time stress measurement device which forms background prior art for the present invention.

SUMMARY

In one example, a method performed by a device having an application processor configured to function based on an operating system and a co-processor configured to receive data from a plurality of sensors of the device is provided. The method comprises determining an interrupt by a given sensor of the plurality of sensors of the device, and the interrupt is indicative of the given sensor having data for output. The method also comprises providing, by the co-processor, a timestamp of the interrupt by the given sensor that is indicative of a time that the given sensor has data for output, and receiving, by the co-processor, the data for output from the given sensor. The method also comprises associating the timestamp of the interrupt by the given sensor with the received data from the given sensor, associating together data received from the plurality of sensors into data structures based on timestamps of the data as provided by the co-processor, and providing, by the co-processor, the data structures to the application processor in sequence based on the timestamps of the data.

In another example, a computer readable memory configured to store instructions that, when executed by a device having an application processor configured to function based on an operating system and a co-processor configured to receive data from a plurality of sensors of the device, cause the device to perform functions is provided. The functions comprise determining an interrupt by a given sensor of the plurality of sensors of the device, and the interrupt is indicative of the given sensor having data for output. The functions also comprise providing, by the co-processor, a timestamp of the interrupt by the given sensor that is indicative of a time that the given sensor has data for output, and receiving, by the co-processor, the data for output from the given sensor. The functions also comprise associating the timestamp of the interrupt by the given sensor with the received data from the given sensor, associating together data received from the plurality of sensors into data structures based on timestamps of the data as provided by the co-processor, and providing, by the co-processor, the data structures to the application processor in sequence based on the timestamps of the data.

In another example, a device is provided that comprises an application processor configured to function based on an operating system, a plurality of sensors, and a co-processor configured to receive data from the plurality of sensors and configured to perform functions. The functions comprise determine an interrupt by a given sensor of the plurality of sensors, and the interrupt is indicative of the given sensor having data for output. The functions also comprise provide a timestamp of the interrupt by the given sensor that is indicative of a time that the given sensor has data for output, receive the data for output from the given sensor, associate the timestamp of the interrupt by the given sensor with the received data from the given sensor, associate together data received from the plurality of sensors into data structures based on timestamps of the data as provided by the co-processor, and provide the data structures to the application processor in sequence based on the timestamps of the data.

These as well as other aspects, advantages, and alternatives, will become apparent to those of ordinary skill in the art by reading the following detailed description, with reference where appropriate to the accompanying figures.

BRIEF DESCRIPTION OF THE FIGURES

Figure 1 illustrates an example computing device.

Figure 2 illustrates another example computing device.

Figures 3A-3B are conceptual illustrations of a computing device that show a configuration of some sensors of the computing device in Figure 2.

Figure 4 is a block diagram of an example method for synchronizing data received from multiple sensors of a device, in accordance with at least some embodiments described herein.

Figure 5A is an example timing diagram conceptually illustrating synchronizing data received from multiple sensors of a device.

Figure 5B is another example timing diagram conceptually illustrating synchronizing data received from multiple sensors of a device.

Figure 6 is another example timing diagram conceptually illustrating synchronizing data received from multiple sensors of a device.

DETAILED DESCRIPTION

The following detailed description describes various features and functions of the disclosed systems and methods with reference to the accompanying figures. In the figures, similar symbols identify similar components, unless context dictates otherwise. The illustrative system and method embodiments described herein are not meant to be limiting. It may be readily understood that certain aspects of the disclosed systems and methods can be arranged and combined in a wide variety of different configurations, all of which are contemplated herein.

Within examples, methods and systems for synchronizing data received from multiple sensors of a device are described. Example methods may be performed by a device having an application processor configured to function based on an operating system and a co-processor configured to receive data from a plurality of sensors of the device. An example method includes determining an interrupt by a given sensor of a plurality of sensors of the device, and the interrupt is indicative of the given sensor having data for output. The method also includes providing, by a co-processor, a timestamp of the interrupt by the given sensor that is indicative of a time that the given sensor has data for output, and receiving, by the co-processor, the data for output from the given sensor. The method also includes associating the timestamp of the interrupt by the given sensor with the received data from the given sensor, and associating together data received from the plurality of sensors into data structures based on timestamps of the data as provided by the co-processor. The method also includes providing, by the co-processor, the data structures to the application processor in sequence based on the timestamps of the data.

In some existing devices, sensor data is provided to an application processor and the sensor data receives a timestamp from software executed by the application processor. However, some time elapses between data collection and data timestamp by the software due to transmission of the data over a communication bus between the sensor and the application processor or due to buffering or queuing of data, and thus, timestamps may be inaccurate or not synchronized across all data received from multiple sensors. Within examples presented herein, the co-processor may be configured to provide hardware based timestamps for all sensor data of the device to capture accurate and precise timestamps for data collected or measured by the sensors.

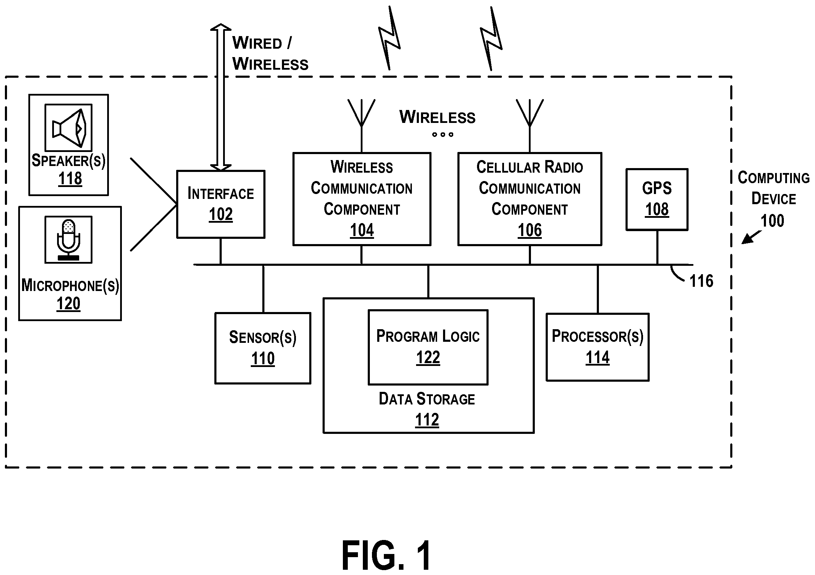

Referring now to the figures, Figure 1 illustrates an example computing device 100. In some examples, components illustrated in Figure 1 may be distributed across multiple computing devices. However, for the sake of example, the components are shown and described as part of one example computing device 100. The computing device 100 may be or include a mobile device (such as a mobile phone), desktop computer, laptop computer, email/messaging device, tablet computer, or similar device that may be configured to perform the functions described herein. Generally, the computing device 100 may be any type of computing device or transmitter that is configured to transmit data or receive data in accordance with methods and functions described herein.

The computing device 100 may include an interface 102, a wireless communication component 104, a cellular radio communication component 106, a global position system (GPS) receiver 108, sensor(s) 110, data storage 112, and processor(s) 114. Components illustrated in Figure 1 may be linked together by a communication link 116. The computing device 100 may also include hardware to enable communication within the computing device 100 and between the computing device 100 and other computing devices (not shown), such as a server entity. The hardware may include transmitters, receivers, and antennas, for example.

The interface 102 may be configured to allow the computing device 100 to communicate with other computing devices (not shown), such as a server. Thus, the interface 102 may be configured to receive input data from one or more computing devices, and may also be configured to send output data to the one or more computing devices. The interface 102 may be configured to function according to a wired or wireless communication protocol. In some examples, the interface 102 may include buttons, a keyboard, a touchscreen, speaker(s) 118, microphone(s) 120, and/or any other elements for receiving inputs, as well as one or more displays, and/or any other elements for communicating outputs.

The wireless communication component 104 may be a communication interface that is configured to facilitate wireless data communication for the computing device 100 according to one or more wireless communication standards. For example, the wireless communication component 104 may include a Wi-Fi communication component that is configured to facilitate wireless data communication according to one or more IEEE 802.11 standards. As another example, the wireless communication component 104 may include a Bluetooth communication component that is configured to facilitate wireless data communication according to one or more Bluetooth standards. Other examples are also possible.

The cellular radio communication component 106 may be a communication interface that is configured to facilitate wireless communication (voice and/or data) with a cellular wireless base station to provide mobile connectivity to a network. The cellular radio communication component 106 may be configured to connect to a base station of a cell in which the computing device 100 is located, for example.

The GPS receiver 108 may be configured to estimate a location of the computing device 100 by precisely timing signals sent by GPS satellites.

The sensor(s) 110 may include one or more sensors, or may represent one or more sensors included within the computing device 100. Example sensors include an accelerometer, gyroscope, pedometer, light sensors, microphone, camera(s), infrared flash, barometer, magnetometer, GPS, WiFi, near field communication (NFC), Bluetooth, projector, depth sensor, temperature sensors, or other location and/or context-aware sensors.

The data storage 112 may store program logic 122 that can be accessed and executed by the processor(s) 114. The data storage 112 may also store data collected by the sensor(s) 110, or data collected by any of the wireless communication component 104, the cellular radio communication component 106, and the GPS receiver 108.

The processor(s) 114 may be configured to receive data collected by any of sensor(s) 110 and perform any number of functions based on the data. As an example, the processor(s) 114 may be configured to determine one or more geographical location estimates of the computing device 100 using one or more location-determination components, such as the wireless communication component 104, the cellular radio communication component 106, or the GPS receiver 108. The processor(s) 114 may use a location-determination algorithm to determine a location of the computing device 100 based on a presence and/or location of one or more known wireless access points within a wireless range of the computing device 100. In one example, the wireless location component 104 may determine the identity of one or more wireless access points (e.g., a MAC address) and measure an intensity of signals received (e.g., received signal strength indication) from each of the one or more wireless access points. The received signal strength indication (RSSI) from each unique wireless access point may be used to determine a distance from each wireless access point. The distances may then be compared to a database that stores information regarding where each unique wireless access point is located. Based on the distance from each wireless access point, and the known location of each of the wireless access points, a location estimate of the computing device 100 may be determined.

In another instance, the processor(s) 114 may use a location-determination algorithm to determine a location of the computing device 100 based on nearby cellular base stations. For example, the cellular radio communication component 106 may be configured to identify a cell from which the computing device 100 is receiving, or last received, signal from a cellular network. The cellular radio communication component 106 may also be configured to measure a round trip time (RTT) to a base station providing the signal, and combine this information with the identified cell to determine a location estimate. In another example, the cellular communication component 106 may be configured to use observed time difference of arrival (OTDOA) from three or more base stations to estimate the location of the computing device 100.

In some implementations, the computing device 100 may include a device platform (not shown), which may be configured as a multi-layered Linux platform. The device platform may include different applications and an application framework, as well as various kernels, libraries, and runtime entities. In other examples, other formats or operating systems may operate the computing g device 100 as well.

The communication link 116 is illustrated as a wired connection; however, wireless connections may also be used. For example, the communication link 116 may be a wired serial bus such as a universal serial bus or a parallel bus, or a wireless connection using, e.g., short-range wireless radio technology, or communication protocols described in IEEE 802.11 (including any IEEE 802.11 revisions), among other possibilities.

The computing device 100 may include more or fewer components. Further, example methods described herein may be performed individually by components of the computing device 100, or in combination by one or all of the components of the computing device 100.

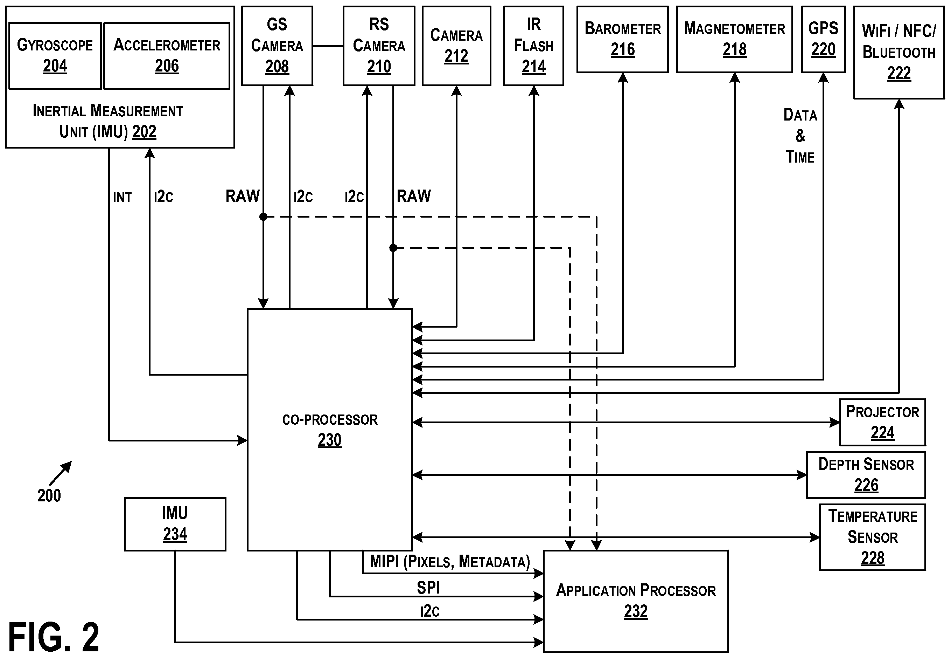

Figure 2 illustrates another example computing device 200. The computing device 200 in Figure 2 may be representative of a portion of the computing device 100 shown in Figure 1. In Figure 2, the computing device 200 is shown to include a number of sensors such as an inertial measurement unit (IMU) 202 including a gyroscope 204 and an accelerometer 206, a global shutter (GS) camera 208, a rolling shutter (RS) camera 210, a front facing camera 212, an infrared (IR) flash 214, a barometer 216, a magnetometer 218, a GPS receiver 220, a WiFi/NFC/Bluetooth sensor 222, a projector 224, a depth sensor 226, and a temperature sensor 228, each of which outputs to a co-processor 230.

The co-processor 230 receives input from and outputs to an application processor 232. The computing device 200 may further include a second IMU 234 that outputs directly to the application processor 232.

The IMU 202 may be configured to determine a velocity, orientation, and gravitational forces of the computing device 200 based on outputs of the gyroscope 204 and the accelerometer 206.

The GS camera 208 may be configured on the computing device 200 to be a rear facing camera, so as to face away from a front of the computing device 200. The GS camera 208 may be configured to read outputs of all pixels of the camera 208 simultaneously. The GS camera 208 may be configured to have about a 120-170 degree field of view, such as a fish eye sensor, for wide-angle viewing.

The RS camera 210 may be configured to read outputs of pixels from a top of the pixel display to a bottom of the pixel display. As one example, the RS camera 210 may be a red/green/blue (RGB) infrared (IR) 4 megapixel image sensor, although other sensors are possible as well. The RS camera 210 may have a fast exposure so as to operate with a minimum readout time of about 5.5ms, for example. Like the GS camera 208, the RS camera 210 may be a rear facing camera.

The camera 212 may be an additional camera in the computing device 200 that is configured as a front facing camera, or in a direction facing opposite of the GS camera 208 and the RS camera 210. The camera 212 may be configured to capture images of a first viewpoint of the computing device 200 and the GS camera 208 and the RS camera 210 may be configured to capture images of a second viewpoint of the device that is opposite the first viewpoint. The camera 212 may be a wide angle camera, and may have about a 120-170 degree field of view for wide angle viewing, for example.

The IR flash 214 may provide a light source for the computing device 200, and may be configured to output light in a direction toward a rear of the computing device 200 so as to provide light for the GS camera 208 and RS camera 210, for example. In some examples, the IR flash 214 may be configured to flash at a low duty cycle, such as 5Hz, or in a non-continuous manner as directed by the co-processor 230 or application processor 232. The IR flash 214 may include an LED light source configured for use in mobile devices, for example.

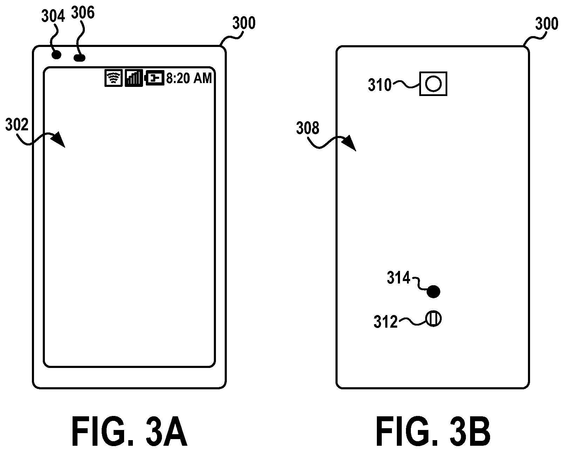

Figures 3A-3B are conceptual illustrations of a computing device 300 that show a configuration of some sensors of the computing device 200 in Figure 2. In Figures 3A-3B, the computing device 300 is shown as a mobile phone. The computing device 300 may be similar to either of computing device 100 in Figure 1 or computing device 200 in Figure 2. Figure 3A illustrates a front of the computing device 300 in which a display 302 is provided, along with a front facing camera 304, and a P/L sensor opening 306 (e.g., a proximity or light sensor). The front facing camera 304 may be the camera 212 as described in Figure 2.

Figure 3B illustrates a back 308 of the computing device 300 in which a rear camera 310 and another rear camera 314 are provided. The rear camera 310 may be the RS camera 210 and the rear camera 312 may be the GS camera 208, as described in the computing device 200 in Figure 2. The back 308 of the computing device 300 also includes an IR-flash 314, which may be the IR flash 214 or the projector 224 as described in the computing device 200 in Figure 2. In one example, the IR flash 214 and the projector 224 may be one in the same. For instance, a single IR flash may be used to perform the functions of the IR flash 214 and the projector 224. In another example, the computing device 300 may include a second flash (e.g., an LED flash) located near the rear camera 310 (not shown). A configuration and placement of the sensors may be helpful to provide desired functionality of the computing device 300, for example, however other configurations are possible as well.

Referring back to Figure 2, the barometer 216 may include a pressure sensor, and may be configured to determine air pressures and altitude changes.

The magnetometer 218 may be configured to provide roll, yaw, and pitch measurements of the computing device 200, and can be configured to operate as an internal compass, for example. In some examples, the magnetometer 218 may be a component of the IMU 202 (not shown).

The GPS receiver 220 may be similar to the GPS receiver 108 described in the computing device 100 of Figure 1. In further examples, the GPS 220 may also output timing signals as received from GPS satellites or other network entities. Such timing signals may be used to synchronize collected data from sensors across multiple devices that include the same satellite timestamps.

The WiFi/NFC/Bluetooth sensor 222 may include wireless communication components configured to operate according to WiFi and Bluetooth standards, as discussed above with the computing device 100 of Figure 1, and according to NFC standards to establish wireless communication with another device via contact or coming into close proximity with the other device.

The projector 224 may be or include a structured light projector that has a laser with a pattern generator to produce a dot pattern in an environment. The projector 224 may be configured to operate in conjunction with the RS camera 210 to recover information regarding depth of objects in the environment, such as three-dimensional (3D) characteristics of the objects. For example, the separate depth sensor 226 may be configured to capture video data of the dot pattern in 3D under ambient light conditions to sense a range of objects in the environment. The projector 224 and/or depth sensor 226 may be configured to determine shapes of objects based on the projected dot pattern. By way of example, the depth sensor 226 may be configured to cause the projector 224 to produce a dot pattern and cause the RS camera 210 to capture an image of the dot pattern. The depth sensor 226 may then process the image of the dot pattern, use various algorithms to triangulate and extract 3D data, and output a depth image to the co-processor 230.

The temperature sensor 228 may be configured to measure a temperature or temperature gradient, such as a change in temperature, for example, of an ambient environment of the computing device 200.

The co-processor 230 may be configured to control all sensors on the computing device 200. In examples, the co-processor 230 may control exposure times of any of cameras 208, 210, and 212 to match the IR flash 214, control the projector 224 pulse sync, duration, and intensity, and in general, control data capture or collection times of the sensors. The co-processor 230 may also be configured to process data from any of the sensors into an appropriate format for the application processor 232. In some examples, the co-processor 230 merges all data from any of the sensors that corresponds to a same timestamp or data collection time (or time period) into a single data structure to be provided to the application processor 232.

The application processor 232 may be configured to control other functionality of the computing device 200, such as to control the computing device 200 to operate according to an operating system or any number of software applications stored on the computing device 200. The application processor 232 may use the data collected by the sensors and received from the co-processor to perform any number of types of functionality. The application processor 232 may receive outputs of the co-processor 230, and in some examples, the application processor 232 may receive raw data outputs from other sensors as well, including the GS camera 208 and the RS camera 210.

The second IMU 234 may output collected data directly to the application processor 232, which may be received by the application processor 232 and used to trigger other sensors to begin collecting data. As an example, outputs of the second IMU 234 may be indicative of motion of the computing device 200, and when the computing device 200 is in motion, it may be desired to collect image data, GPS data, etc. Thus, the application processor 232 can trigger other sensors through communication signaling on common buses to collect data at the times at which the outputs of the IMU 234 indicate motion.

The computing device 200 shown in Figure 2 may include a number of communication buses between each of the sensors and processors. For example, the co-processor 230 may communicate with each of the IMU 202, the GS camera 208, and the RS camera 212 over an inter-integrated circuit (I2C) bus that includes a multi-master serial single-ended bus for communication. The co-processor 230 may receive raw data collected, measured, or detected by each of the IMU 202, the GS camera 208, and the RS camera 212 over the same I2C bus or a separate communication bus. The co-processor 230 may communicate with the application processor 232 over a number of communication buses including a serial peripheral interface (SPI) bus that includes a synchronous serial data link that may operate in full duplex mode, the I2C bus, and a mobile industry processor interface (MIPI) that includes a serial interface configured for communicating camera or pixel information. Use of various buses may be determined based on need of speed of communication of data as well as bandwidth provided by the respective communication bus, for example.

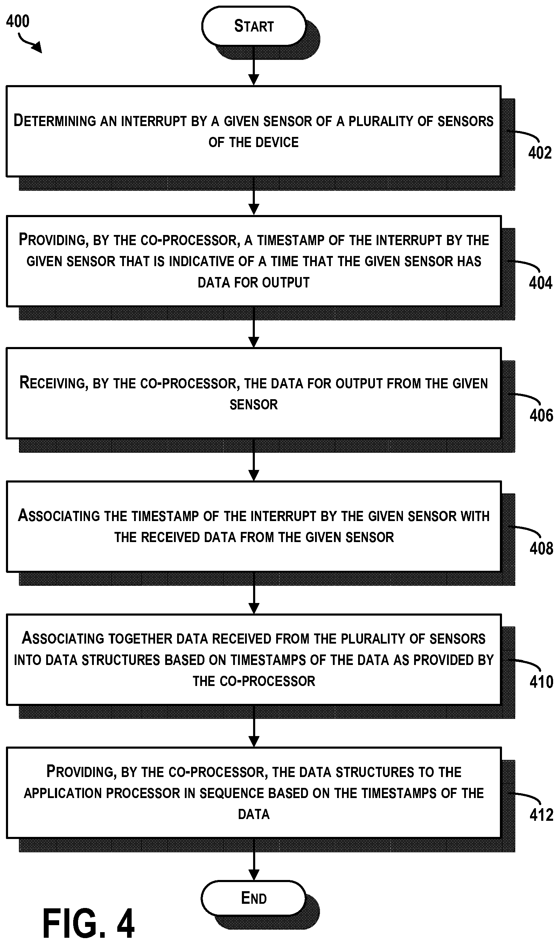

Figure 4 is a block diagram of an example method for synchronizing data received from multiple sensors of a device, in accordance with at least some embodiments described herein. Method 400 shown in Figure 4 presents an embodiment of a method that, for example, could be used with the computing device 100 in Figure 1, the computing device 200 in Figure 2, or the computing device 300 in Figure 3, for example, or may be performed by a combination of any components of the computing device 100 in Figure 1, the computing device 200 in Figure 2, or the computing device 300 in Figure 3. Method 400 may include one or more operations, functions, or actions as illustrated by one or more of blocks 402-412. Although the blocks are illustrated in a sequential order, these blocks may in some instances be performed in parallel, and/or in a different order than those described herein. Also, the various blocks may be combined into fewer blocks, divided into additional blocks, and/or removed based upon the desired implementation.

In addition, for the method 400 and other processes and methods disclosed herein, the flowchart shows functionality and operation of one possible implementation of present embodiments. In this regard, each block may represent a module, a segment, or a portion of program code, which includes one or more instructions executable by a processor for implementing specific logical functions or steps in the process. The program code may be stored on any type of computer readable medium, for example, such as a storage device including a disk or hard drive. The computer readable medium may include a non-transitory computer readable medium, for example, such as computer-readable media that stores data for short periods of time like register memory, processor cache and Random Access Memory (RAM). The computer readable medium may also include other non-transitory media, such as secondary or persistent long term storage, like read only memory (ROM), optical or magnetic disks, compact-disc read only memory (CD-ROM), for example. The computer readable media may also be any other volatile or non-volatile storage systems. The computer readable medium may be considered a computer readable storage medium, a tangible storage device, or other article of manufacture, for example. The program code (or data for the code) may also be stored or provided on other media including communication media, such as a wireless communication media, for example.

In addition, for the method 400 and other processes and methods disclosed herein, each block in Figure 4 may represent circuitry that is wired to perform the specific logical functions in the process.

Functions of the method 400 may be fully performed by a computing device, or may be distributed across multiple computing devices and/or a server. In some examples, the computing device may receive information from sensors of the computing device, or where the computing device is a server the information can be received from another device that collects the information. The computing device could further communicate with a server to receive information from sensors of other devices, for example. The method 400 may further be performed by a device that has an application processor configured to function based on an operating system and a co-processor configured to receive data from a plurality of sensors of the device. The sensors may include any sensors as described above in any of Figure 1, Figure 2, or Figures 3A-3B, for example, including an IMU, a global shutter camera, a rolling shutter camera, a structured light projector, a depth camera, an infrared flash, a barometer, a magnetometer, and a temperature sensor.

At block 402, the method 400 includes determining an interrupt by a given sensor of the plurality of sensors of the device. The interrupt is indicative of the given sensor having data for output. As an example, the co-processor may receive a signal from the sensor indicating the interrupt, such as a signal including a flag set to true. The sensor may send the signal once the sensor has data for output, for example, after performing a sensing function. A sensor may have data for output based on the sensor performing data collection internally, or based on being triggered to perform a data collection.

At block 404, the method 400 includes providing, by the co-processor, a timestamp of the interrupt by the given sensor that is indicative of a time that the given sensor has data for output. For instance, at the time the co-processor determines the interrupt, the co-processor generates a timestamp for the interrupt, and stores the timestamp with the interrupt, and with other metadata indicating the sensor providing the interrupt. In this way, the co-processor marks an exact time at which the sensor collected data.

As another example, for cameras, an image capture may not occur at a discrete point in time due to image capture requiring time to expose an image. It may be desired to determine a timestamp of the image that corresponds to a beginning, middle, or ending of the exposure. For an RS camera, for example, which exposes from top to bottom, a top portion of the image occurs earlier in time than a bottom portion of the image, and the image may be associated with only one timestamp, and so the co-processor can generate a timestamp at a center exposure time to minimize a time difference between a top and bottom portion of the image. The co-processor may know an exposure time of the camera and can generate the timestamp to be at a center exposure time based on an average of exposure times of the camera once triggered to capture an image, for example.

At block 406, the method 400 includes receiving, by the co-processor, the data for output from the given sensor. Thus, after generating the timestamp, the co-processor can retrieve the data from the sensor. The data may be provided from the sensor to the co-processor along any number of communication buses within the computing device. The data transmission can occur over a time period, e.g., about 10-30ms. Thus, the co-processor can request the data from the sensor that corresponds to the interrupt. Timestamping and data retrieval are performed separately because a query for sensor data may be slow and take time, and accurate timestamps may be required for data processing. Thus, the interrupt is used as a flag to generate the timestamp, and then a data fetch is subsequently performed.

At block 408, the method 400 includes associating the timestamp of the interrupt by the given sensor with the received data from the given sensor. In this manner, the co-processor can associate a time at which the data was collected by the sensor with the data, rather than associating a time of receipt of the data at the co-processor as the data collection time. Since the data transmission from the sensor to the co-processor consumes some time, an exact timestamp at time of data collection by the sensor is provided based on the timestamp of the previously received interrupt.

At block 410, the method 400 includes associating together data received from the plurality of sensors into data structures based on timestamps of the data as provided by the co-processor. For example, the co-processor may receive data from many sensors of the device, and the data can be organized based on timestamps generated for interrupts as provided by the co-processor. For data received by the co-processor from sensors and associated with an interrupt timestamp of the same time, such data can be associated together or formatted together into one data structure.

The data can be formatted into any number of types of data structures. In one example, the data may be stored into one file indicating a type of data, a sensor that collected the data, and a timestamp for the data. In another example, the data can be formatted into an image frame format data structure, where data is stored as pixel values for the given timestamp. The image frame format may take the form of a transport datatype of "RGB" or "YUV" for traditional transmission across a camera interface.

At block 412, the method 400 includes providing, by the co-processor, the data structures to the application processor in sequence based on the timestamps of the data. The application processor may then receive the data in sequence as the data is collected.

Within examples, using the method 400 in Figure 4, accurate timing of data collection by sensors is provided based on timestamps provided by the co-processor that is dedicated to timestamp/synchronize all sensor data. Functionality performed based on the synchronized sensor data may be performed by the application processor. All sensor data is synchronized based on the same time clock since all data is timestamped by the same co-processor that runs according to a master clock so as to provide a hardware level time synchronization. In addition, the timestamp is generated based on the interrupt, and so the timestamp is the time of data collection by the sensor rather than the time of data receipt at the co-processor.

In some examples, the method 400 may further include providing, by the co-processor, data received from an IMU to the application processor prior to associating together the data received from the plurality of sensors into the data structures, and subsequently providing the data structures to the application processor. An IMU may collect data at a higher frequency than other sensors, and the IMU data may be more useful to the application processor than other data. Thus, the co-processor can generate timestamps for IMU data, retrieve the IMU data, and immediately provide the IMU data to the application processor ahead of other data associated with the same timestamp so that the application processor can have the data to perform time-sensitive functions.

The computing device may include a bus for communication between the application processor and the co-processor, and another bus for communication between the co-processor and the sensors that has a latency less than communication on between the application processor and the co-processor. In some instances, the co-processor may receive data from the IMU and provide the data to the application processor on the same bus so as to provide the data more quickly to the application processor. The bus may be an SPI bus as a fast low-latency communication channel for IMU data. The data structures, which are a larger amount of data, can then be assembled and provided to application processor on the I2C bus, for example, which allows for larger bandwidths of data transmission. The application processor may benefit by receiving the IMU data alone quickly, for example.

In further examples, the device may include multiple cameras the co-processor may provide a trigger signal to a first camera requesting data output from the first camera. The trigger signal can be received by other cameras of the device via the first camera, so as to cause capture of images in synchrony. As examples, one camera may be an RS camera and another camera may be a GS camera. The trigger signal can be provided to the GS camera at about a center exposure time of the RS camera so as to cause exposure of the GS camera at about the center exposure time of the RS camera.

The sensors may also include a red-green-blue (RGB) camera and an infrared (IR) sensor. The IR sensor may be configured to output data at a frequency that is less than an output frequency of the RGB camera. Thus, when associating together data form the sensors, data output by the IR sensor can be interleaved within data output by the RGB camera based on timestamps of the respective data as provided by the co-processor. As an example, about four frames of image data may be received from the camera for every one frame of depth data from the IR sensor.

In further examples, sensors may output data at a first frequency data can be associated together by the co-processor into data structures at a second frequency that is less than the first frequency. For example, data may be output by the sensors faster than a camera framerate used to transmit data, and thus, the co-processor may provide most recent IMU data samples (which may be configured to run at 120Hz) within the data structure at a slower frequency so as to provide multiple samples of IMU data within one data structure.

In some examples, the sensors may include a buffer to store recently collected data, and the sensors may provide current data collected as well as previous data for output to the co-processor. The previous data may be redundant data received for error correction, since the previous data was likely received previously by the co-processor. For instance, the IMU may have a running buffer of redundant IMU data, and instead of just pulling latest data from the IMU, the co-processor can collect all data from the buffer to receive a most recent X number of samples from the IMU. If a frame of data is ever missed or corrupted during data transmission, the redundant data received by the co-processor received in a next frame of data can be used to fill in missing data. As an example, if the computing device were rotating 30 degrees per second, and a frame of data was missed, an exact location and orientation of the computing device may not be known (i.e., the location/orientation estimate may be now a few degrees off from where the device is actually located). By providing redundant data, lost or missing data from the IMU can be identified to make corrections to any location/orientation estimates of the device.

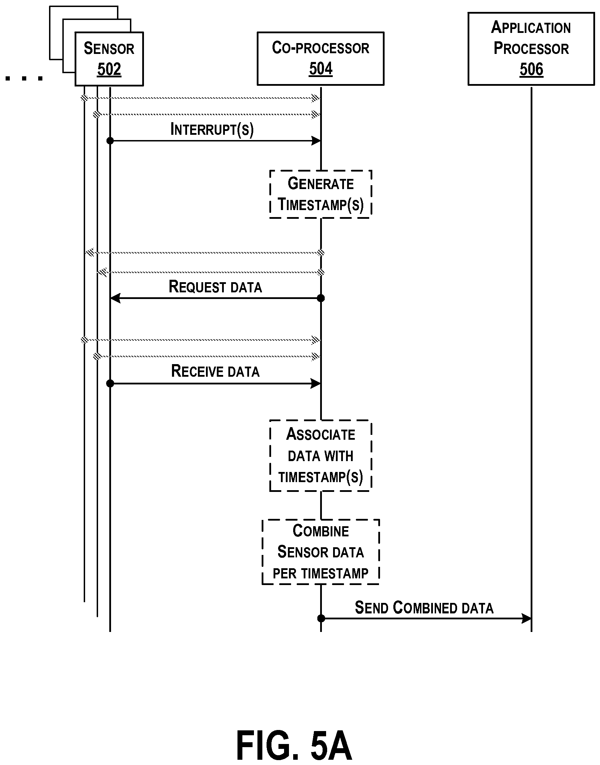

Figure 5A is an example timing diagram conceptually illustrating synchronizing data received from multiple sensors of a device. As shown, a sensor 502 may provide an interrupt to a co-processor 504, at which time the co-processor 504 will generate a timestamp. A number of sensors may provide interrupts to the co-processor 504 simultaneously or at various intervals, and upon receipt of an interrupt, the co-processor 504 will generate an associated timestamp. The co-processor 504 may then request the data from the sensor 502 corresponding to the interrupt, and subsequently receive the data from the sensor 502. In other examples, the co-processor 504 may not need to request the data from the sensor 502 as the sensor 502 will provide the data after providing an interrupt. Upon receipt of the sensor data, the co-processor may associate the timestamp with the respective data by matching interrupt timestamps to corresponding sensor data, and then combine sensor data per timestamp into a single data structure per timestamp. The co-processor 504 may subsequently provide the data structures to an application processor 506 in sequence.

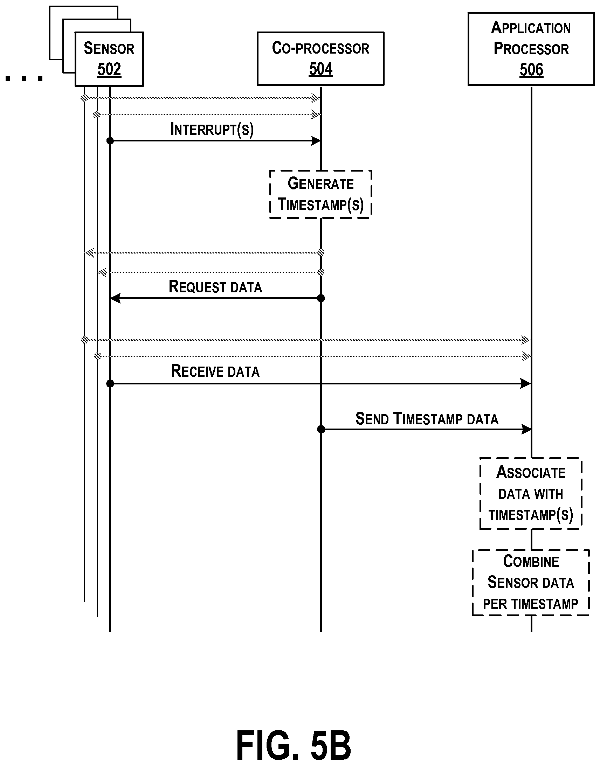

Figure 5B is another example timing diagram conceptually illustrating synchronizing data received from multiple sensors of a device. In Figure 5B, the sensor 502 may provide an interrupt to the co-processor 504, at which time the co-processor 504 will generate a timestamp. A number of sensors may provide interrupts to the co-processor 504 simultaneously or at various intervals, and upon receipt of an interrupt, the co-processor 504 will generate an associated timestamp. The co-processor 504 may then request the data from the sensor 502 corresponding to the interrupt, and subsequently the sensor 502 may forward the data to the application processor 508. The co-processor 504 may then send the timestamp data to the application processor 508. Upon receipt of the data, the application processor 508 may associate the timestamp with the respective data by matching interrupt timestamps to corresponding sensor data, and then combine sensor data per timestamp into a single data structure per timestamp.

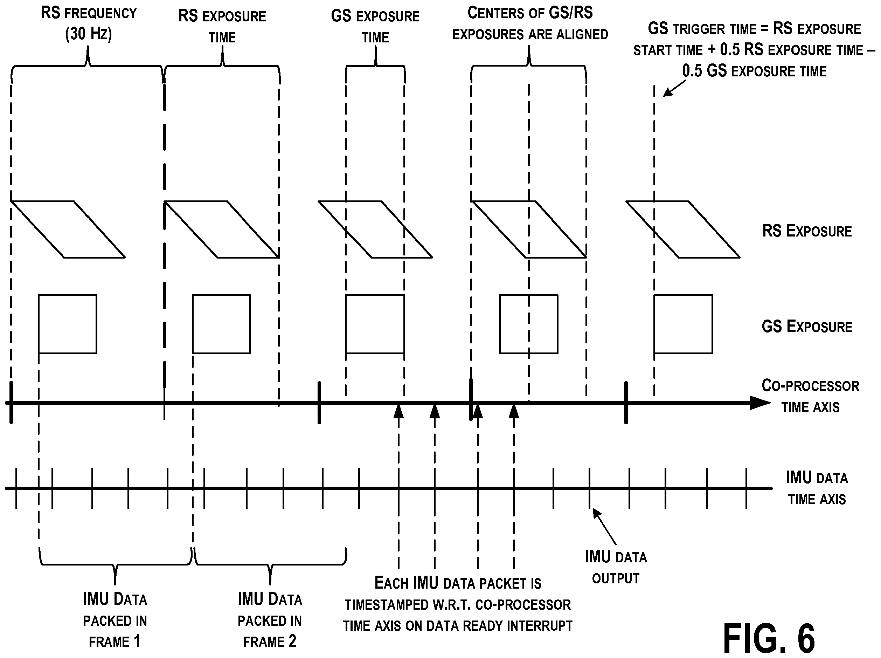

Figure 6 is another example timing diagram conceptually illustrating synchronizing data received from multiple sensors of a device. In Figure 6, two timelines are shown that correspond to a timeline of data output by an IMU, and a time axis of a co-processor. The IMU may output data at intervals as shown along the IMU data time axis. Each IMU data packet is timestamped with respect to the co-processor time axis based on a data ready interrupt provided by the IMU to the co-processor.

Example RS exposure and GS exposure times for an RS camera and GS camera are shown along the co-processor time axis as well. Since the RS exposure occurs from a top to a bottom of the image, the exposure is over a longer time period than exposure of the GS camera. The RS camera may operate at a frequency of 30 Hz, for example. A GS camera trigger time is set to coincide with an exposure of the center scanline of the RS camera so that centers of the GS camera and RS camera exposures are time aligned. For example, the RS camera may require 30ms to capture an image, and the GS camera may only require 20ms, and thus, the GS trigger time can be set to be 5ms after the RS exposure time so that the centers of the GS camera and RS camera exposure times are aligned. The trigger time for the GS camera may then be as follows

$$\text{GS Trigger time} = \text{RS exposure start time} + \tfrac{1}{2}\,\text{RS exposure time} - \tfrac{1}{2}\,\text{GS exposure time}$$

The center scanline of the cameras is the timestamp produced for the camera images by the co-processor as determined from a timestamped end of a camera readout and subtracting a deterministic readout and exposure time for the frame, for example.

The co-processor captures data from both cameras and IMU in a synchronized manner, and then combines the data into a data structure to be provided to an application processor. The data structures may be in an image frame format. Figure 6 illustrates that a single frame includes an image from the RS camera, an image from the GS camera, and about four to five outputs from the IMU. Since the IMU runs faster than the cameras, the IMU data will be accumulated more quickly and can be provided separately to the application processor for immediate use, for example.

Thus, IMU data may be recorded as soon as a packet is ready and time stamped at a frame rate of the IMU (i.e., if the IMU is set at 100 Hz mode, then IMU packets may be read-out at 100 Hz, and corresponding co-processor timestamps on the IMU packets can occur at 100 Hz). The IMU data may then be time-aligned with an image frame in which the IMU data is packed. In examples, a first IMU data packet in a frame corresponds with an image trigger time of the GS camera. In other examples, the table below shows a sample set of images and IMU data packed into frames when the camera is running at 30 Hz (approximated as 33ms delta t in the table), and the IMU is running at 120 Hz (approximated as 8 ms delta t in the table).

| Image frame 1 (GS): ts 0 ms | Image frame 2 (GS): ts 33 ms | Image frame 3 (GS): ts 66 ms | Image frame 4 (GS): ts 99 ms |
|---|---|---|---|
| IMU pkt 1: ts 3 ms<br>IMU pkt 2: ts 11 ms<br>IMU pkt 3: ts 19 ms<br>IMU pkt 4: ts 27 ms | IMU pkt 5: ts 35 ms<br>IMU pkt 6: ts 43 ms<br>IMU pkt 7: ts 51 ms<br>IMU pkt 8: ts 59 ms | IMU pkt 9: ts 67 ms<br>IMU pkt 10: ts 75 ms<br>IMU pkt 11: ts 83 ms<br>IMU pkt 12: ts 91 ms | IMU pkt 13: ts 99 ms<br>IMU pkt 14: ts 107 ms<br>IMU pkt 15: ts 115 ms<br>IMU pkt 16: ts 123 ms |

Both the RS camera and the GS camera may be time stamped with respect to the co-processor time axis at a beginning of their respective exposure. Both the RS camera and the GS camera exposure times are also recorded to compute a beginning, middle, and end of exposure.

In further examples, image frames may include additional data as well, such as data from previous frames. As an example, frame 2 may include all data for frame 2 as well as all data within frame 1, and the redundancy of resending data from frame 1 within frame 2 can be used for error correction or data verifications.

Within examples described herein, data output from sensors can be associated with an exact timestamp of the data corresponding to the time the data was collected by the sensors, and data from multiple sensors can be synchronized into data structures. In some examples, this enables synchronization of data indicating motion of the device (e.g., data output by a gyroscope) with camera images. Sensor data from all sensors of a device can be accurately synchronized to take a readout of the sensors and match data from all sensors that was collected at the same time together into a data structure without any software timestamp delays or inaccuracies, for example.

It should be understood that arrangements described herein are for purposes of example only. As such, those skilled in the art will appreciate that other arrangements and other elements (e.g. machines, interfaces, functions, orders, and groupings of functions, etc.) can be used instead, and some elements may be omitted altogether according to the desired results. Further, many of the elements that are described are functional entities that may be implemented as discrete or distributed components or in conjunction with other components, in any suitable combination and location, or other structural elements described as independent structures may be combined.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims, along with the full scope of equivalents to which such claims are entitled. It is also to be understood that the terminology used herein is for the purpose of describing particular embodiments only, and is not intended to be limiting.

**Claims**

1. A method performed by a device having an application processor configured to function based on an operating System and a co-processor configured to receive data from a plurality of sensors of the device, the method comprising:

   determining an interrupt by a given sensor of the plurality of sensors of the device, wherein the interrupt is indicative of the given sensor having data for output;
   providing, by the co-processor, a timestamp of the interrupt by the given sensor that is indicative of a time that the given sensor has data for output;
   receiving, by the co-processor, the data for output from the given sensor;
   associating the timestamp of the interrupt by the given sensor with the received data from the given sensor;
   associating together data received from the plurality of sensors into data structures based on timestamps of the data as provided by the co-processor; and
   providing, by the co-processor, the data structures to the application processor in sequence based on the timestamps of the data.

2. The method of claim 1, further comprising wherein the data structures comprise an image frame format, and/or wherein one of the plurality of sensors comprises an inertial measurement unit (IMU), and wherein the method further comprises:

   providing, by the co-processor, data received from the IMU to the application processor prior to associating together the data received from the plurality of sensors into the data structures; and
   subsequently providing the data structures to the application processor.

3. The method of claim 1, wherein the device includes a first bus for communication between the application processor and the co-processor, and a second bus for communication between the co-processor and the plurality of sensors, wherein the second bus is configured for communication having a latency less than communication on the first bus, and wherein the method further comprises:

   providing, by the co-processor, data received from an inertial measurement unit (IMU) of the plurality of sensors to the application processor via the second bus; and
   providing, by the co-processor, the data structures to the application processor via the first bus.

4. The method of claim 1, further comprising receiving previous data for output by the given sensor from a buffer of the given sensor in addition to the data for output from the given sensor, wherein the previous data is redundant data received for error correction.

5. The method of claim 4, wherein the given sensor is configured to output data at a first frequency, and the method further comprises:

   associating together, by the co-processor, data received from the plurality of sensors into data structures at a second frequency, wherein the first frequency is greater than the second frequency; and
   providing the received previous data for output from the buffer of the given sensor in the data structures.

**6.** The method of claim 1, wherein the plurality of sensors of the device includes multiple cameras, and wherein the method further comprises:
providing, by the co-processor, a trigger signal to a first camera of the multiple cameras, wherein the trigger signal requests data output from the first camera, wherein the trigger signal is received by other cameras of the multiple cameras via the first camera, so as to cause capture of images in synchrony.

**7.** The method of claim 6, wherein the first camera is a rolling shutter camera and a second camera is a global shutter camera, and the method further comprises:
providing the trigger signal to the second camera at about a center exposure time of the first camera so as to cause exposure of the second camera at about the center exposure time of the first camera.

**8.** The method of claim 1, wherein the plurality of sensors include a red-green-blue (RGB) camera and an infrared (1R) sensor, and wherein the RGB camera is configured to output data at a first frequency and the IR sensor is configured to output data at a second frequency that is less than the first frequency, and the method further comprises:

interleaving data output by the IR sensor within data output by the RGB camera based on timestamps of the respective data as provided by the co-processor; or
wherein the plurality of sensors include an inertial measurement unit (IMU), a global shutter camera, a rolling shutter camera, a structured light projector, a depth camera, an infrared flash, a barometer, a magnetometer, and a temperature sensor; or
wherein the plurality of sensors includes three cameras, wherein a first camera is a front facing camera, and a second camera and a third camera are each rear facing cameras, wherein the front facing camera is configured to capture images of a first viewpoint of the device and the rear facing cameras are configured to capture images of a second viewpoint of the device that is opposite the first viewpoint; or
wherein the given sensor includes a GPS sensor configured to output data indicative of a location of the device and a timestamp of the location as received from network entity, and the method further comprising:
associating the location and the timestamp into a given data structure based on the timestamp of the location as received from the network entity.

**9.** A computer readable memory configured to store instructions that, when executed by a device having an application processor configured to function based on an operating System and a co-processor configured to receive data from a plurality of sensors of the device, cause the device to perform the method of one of claims 1 to 8.

**10.** The computer readable memory of claim 9, wherein the functions further comprise:

receiving previous data for output by the given sensor from a buffer of the given sensor in addition to the data for output from the given sensor, wherein the previous data is redundant data received for error correction; and
associating together, by the co-processor, the received previous data for output from the buffer of the given sensor in the data structures.

**11.** The computer readable memory of claim 9, wherein the plurality of sensors of the device includes a rolling shutter camera and a global shutter camera, and the functions further comprise:

providing, by the co-processor, a trigger signal to the rolling shutter camera at about a center exposure time of the rolling shutter camera, wherein the trigger signal requests data output from the rolling shutter camera, wherein the trigger signal is received by the global shutter camera via the rolling shutter camera so as to cause capture of images by the rolling shutter camera and the global shutter camera at about the center exposure time of the rolling shutter camera.

**12.** A device comprising:

an application processor configured to function based on an operating System;
a plurality of sensors; and
a co-processor configured to receive data from the plurality of sensors, and wherein the co-processor is configured to perform functions comprising:

determine an interrupt by a given sensor of the plurality of sensors, wherein the interrupt is indicative of the given sensor having data for output;

provide a timestamp of the interrupt by the given sensor that is indicative of a time that the given sensor has data for output;

receive the data for output from the given sensor;

associate the timestamp of the interrupt by the given sensor with the received data from the given sensor;

associate together data received from the plurality of sensors into data structures based on timestamps of the data as provided by the co-processor; and

provide the data structures to the application processor in sequence based on the timestamps of the data.

13. The device of claim 12, wherein the co-processor is configured to associate together the data received from the plurality of sensors into the data structures having an image frame format; and/or

wherein one of the plurality of sensors comprises an inertial measurement unit (IMU), and wherein the co-processor is further configured to:

provide data received from the IMU to the application processor prior to associating together the data received from the plurality of sensors into the data structures; and subsequently providing the data structures to the application processor.

14. The device of claim 12, further comprising:

a first bus for communication between the application processor and the co-processor; and

a second bus for communication between the co-processor and the plurality of sensors, wherein the second bus is configured for communication having a latency less than communication on the first bus, and

wherein the co-processor is configured to provide data received from an inertial measurement unit (IMU) of the plurality of sensors to the application processor via the second bus and provide the data structures to the application processor via the first bus.

15. A method performed by a device having an application processor configured to function based on an operating System and a co-processor configured to receive data from a plurality of sensors of the device, the method comprising:

determining an interrupt by a given sensor of the plurality of sensors of the device, wherein the interrupt is indicative of the given sensor having data for output;

providing, by the co-processor, a timestamp of the interrupt by the given sensor that is indicative of a time that the given sensor has data for output;

providing, by the co-processor, the timestamp to the application processor;

receiving, by the application -processor, the data for output from the given sensor; associating the timestamp of the interrupt by the given sensor with the received data from the given sensor; and

associating together data received from the plurality of sensors into data structures based on timestamps of the data as provided by the co-processor.

**Patentansprüche**

1. Verfahren, das durch eine Einrichtung ausgeführt wird, die einen Anwendungsprozessor, der konfiguriert ist, auf der Grundlage eines Betriebssystems zu arbeiten, und einen Coprozessor, der konfiguriert ist, Daten von mehreren Sensoren der Einrichtung zu empfangen, besitzt, wobei das Verfahren Folgendes umfasst:

Bestimmen einer Unterbrechung durch einen gegebenen Sensor der mehreren Sensoren der Einrichtung, wobei die Unterbrechung anzeigt, dass der gegebene Sensor Daten zum Ausgeben besitzt;

Bereitstellen eines Zeitstempels der Unterbrechung durch den gegebenen Sensor, der eine Zeit anzeigt, zu der der gegebene Sensor Daten zum Ausgeben besitzt, durch den Coprozessor;

Empfangen der Daten zum Ausgeben von dem gegebenen Sensor durch den Coprozessor;

Zuordnen des Zeitstempels der Unterbrechung durch den gegebenen Sensor zu den von dem gegebenen Sensor empfangenen Daten;

Verknüpfen von Daten, die von den mehreren Sensoren empfangen wurden, miteinander in Datenstrukturen auf der Grundlage von Zeitstempeln der Daten, die durch den Coprozessor bereitgestellt werden; und

Bereitstellen der Datenstrukturen für den Anwendungsprozessor durch den Coprozessor der Reihe nach auf der Grundlage der Zeitstempel der Daten.

2. Verfahren nach Anspruch 1, wobei die Datenstrukturen ein Bildblockformat umfassen und/oder

einer der mehreren Sensoren eine Trägheitsmesseinheit (IMU) umfasst, wobei das Verfahren ferner Folgendes umfasst:

Bereitstellen durch den Coprozessor von Daten, die von der IMU empfangen wurden, für den Anwendungsprozessor, bevor die Daten, die von den mehreren Sensoren empfangen wurden, den Datenstrukturen zugeordnet werden; und
anschließend Bereitstellen der Datenstrukturen für den Anwendungsprozessor.

3. Verfahren nach Anspruch 1, wobei die Einrichtung einen ersten Bus für die Kommunikation zwischen dem Anwendungsprozessor und dem Coprozessor und einen zweiten Bus für die Kommunikation zwischen dem Coprozessor und den mehreren Sensoren umfasst, wobei der zweite Bus für eine Kommunikation konfiguriert ist, die eine geringere Latenz als die Kommunikation auf dem ersten Bus aufweist, wobei das Verfahren ferner Folgendes umfasst:

Bereitstellen von Daten, die von einer Trägheitsmesseinheit (IMU) von den mehreren Sensoren empfangen wurden, durch den Coprozessor über den zweiten Bus für den Anwendungsprozessor; und
Bereitstellen der Datenstrukturen durch den Coprozessor über den ersten Bus für den Anwendungsprozessor.

4. Verfahren nach Anspruch 1, das ferner das Empfangen vorhergehender Daten zum Ausgeben durch den gegebenen Sensor aus einem Puffer des gegebenen Sensors zusätzlich zu den Daten zum Ausgeben von dem gegebenen Sensor umfasst, wobei die vorhergehenden Daten redundante Daten sind, die zur Fehlerkorrektur empfangen werden.

5. Verfahren nach Anspruch 4, wobei der gegebene Sensor konfiguriert ist, Daten mit einer ersten Frequenz auszugeben, und das Verfahren ferner Folgendes umfasst:

Zuordnen von Daten, die von den mehreren Sensoren empfangen wurden, zu Datenstrukturen durch den Coprozessor mit einer zweiten Frequenz, wobei die erste Frequenz höher als die zweite Frequenz ist; und
Bereitstellen der empfangenen vorhergehenden Daten zum Ausgeben aus dem Puffer des gegebenen Sensors in den Datenstrukturen.

6. Verfahren nach Anspruch 1, wobei die mehreren Sensoren der Einrichtung mehrere Kameras enthalten und das Verfahren ferner Folgendes umfasst:
Bereitstellen eines Auslösesignals für eine erste Kamera der mehreren Kameras durch den Coprozessor, wobei das Auslösesignal eine Datenausgabe von der ersten Kamera anfordert und das Auslösesignal durch weitere Kameras der mehreren Kameras über die erste Kamera empfangen wird, um das synchrone Erfassen von Bildern zu bewirken.

7. Verfahren nach Anspruch 6, wobei die erste Kamera eine Kamera mit rollendem Verschluss ist und eine zweite Kamera eine Kamera mit globalem Verschluss ist und das Verfahren ferner Folgendes umfasst:
Bereitstellen des Auslösesignals für die zweite Kamera etwa in der Mitte einer Belichtungszeit der ersten Kamera, um eine Belichtung der zweiten Kamera etwa in der Mitte einer Belichtungszeit der ersten Kamera zu bewirken.

8. Verfahren nach Anspruch 1, wobei die mehreren Sensoren eine Rot-Grün-Blau-Kamera (RGB-Kamera) und einen Infrarotsensor (IR-Sensor) umfassen, wobei die RGB-Kamera konfiguriert ist, Daten mit einer ersten Frequenz auszugeben, und der IR-Sensor konfiguriert ist, Daten mit einer zweiten Frequenz, die geringer als die erste Frequenz ist, auszugeben, und das Verfahren ferner Folgendes umfasst:

Verschachteln der Datenausgabe durch den IR-Sensor mit der Datenausgabe durch die RGB-Kamera auf der Grundlage von Zeitstempeln der entsprechenden Daten, die durch den Coprozessor bereitgestellt werden; oder wobei
die mehreren Sensoren eine Trägheitsmesseinheit (IMU), eine Kamera mit globalem Verschluss, eine Kamera mit rollendem Verschluss, einen Projektor für strukturiertes Licht, eine Tiefenkamera, einen Infrarotblitz, ein Barometer, ein Magnetometer und einen Temperatursensor umfassen; oder
die mehreren Sensoren drei Kameras enthalten, wobei eine erste Kamera eine vorwärtsgewandte Kamera ist und eine zweite Kamera und eine dritte Kameras rückwärtsgewandte Kameras sind, wobei die vorwärtsgewandte Kamera konfiguriert ist, Bilder von einem ersten Standpunkt der Einrichtung zu erfassen und die rückwärtsgewandten Kameras konfiguriert sind, Bilder von einem zweiten Standpunkt der Einrichtung, der dem ersten Standpunkt gegenüberliegt, zu erfassen; oder

der gegebene Sensor einen GPS-Sensor umfasst, der konfiguriert ist, Daten auszugeben, die einen Ort der Einrichtung und einen Zeitstempel des Ortes, der von einer Netzeinheit empfangen wurde, anzeigen, und das Verfahren ferner Folgendes umfasst:

Zuordnen des Ortes und des Zeitstempels zu einer gegebenen Datenstruktur auf der Grundlage des Zeitstempels des Ortes, der von der Netzeinheit empfangen wurde.

9. Computerlesbarer Speicher, der konfiguriert ist, Anweisungen zu speichern, die dann, wenn sie durch eine Einrichtung, die einen Anwendungsprozessor, der konfiguriert ist, auf der Grundlage eines Betriebssystems zu arbeiten, und einen Coprozessor, der konfiguriert ist, Daten von mehreren Sensoren der Einrichtung zu empfangen, besitzt, ausgeführt werden, bewirken, dass die Einrichtung das Verfahren nach einem der Ansprüche 1 bis 8 ausführt.

10. Computerlesbarer Speicher nach Anspruch 9, wobei die Funktionen ferner Folgendes umfassen:

Empfangen vorhergehender Daten zum Ausgeben durch den gegebenen Sensor aus einem Puffer des gegebenen Sensors zusätzlich zu den Daten zum Ausgeben von dem gegebenen Sensor, wobei die vorhergehenden Daten redundante Daten sind, die zur Fehlerkorrektur empfangen werden; und
Zuordnen der empfangenen vorhergehenden Daten zum Ausgeben aus dem Puffer des gegebenen Sensors zu den Datenstrukturen durch den Coprozessor.

11. Computerlesbarer Speicher nach Anspruch 9, wobei die mehreren Sensoren der Einrichtung eine Kamera mit rollendem Verschluss und eine Kamera mit globalem Verschluss umfassen und die Funktionen ferner Folgendes umfassen:

Bereitstellen eines Auslösesignals für die Kamera mit rollendem Verschluss durch den Coprozessor etwa in der Mitte einer Belichtungszeit der Kamera mit rollendem Verschluss, wobei das Auslösesignal eine Datenausgabe von der Kamera mit rollendem Verschluss anfordert,
wobei das Auslösesignal durch die Kamera mit globalem Verschluss über die Kamera mit rollendem Verschluss empfangen wird, um das Erfassen von Bildern durch die Kamera mit rollendem Verschluss und die Kamera mit globalem Verschluss etwa in der Mitte einer Belichtungszeit der Kamera mit rollendem Verschluss zu bewirken.

12. Einrichtung, die Folgendes umfasst:

einen Anwendungsprozessor, der konfiguriert ist, auf der Grundlage eines Betriebssystems zu arbeiten;
mehrere Sensoren; und
einen Coprozessor, der konfiguriert ist, Daten von den mehreren Sensoren zu empfangen, wobei der Coprozessor konfiguriert ist, Funktionen auszuführen, die Folgendes umfassen:

Bestimmen einer Unterbrechung durch einen gegebenen Sensor der mehreren Sensoren, wobei die Unterbrechung anzeigt, dass der gegebene Sensor Daten zum Ausgeben besitzt;
Bereitstellen eines Zeitstempels der Unterbrechung durch den gegebenen Sensor, der eine Zeit anzeigt, zu der der gegebene Sensor Daten zum Ausgeben besitzt;
Empfangen der Daten zum Ausgeben von dem gegebenen Sensor;
Zuordnen des Zeitstempels der Unterbrechung durch den gegebenen Sensor zu den von dem gegebenen Sensor empfangen Daten;
Zuordnen von Daten, die von den mehreren Sensoren empfangen wurden, zu Datenstrukturen auf der Grundlage von Zeitstempeln der Daten, die durch den Coprozessor bereitgestellt werden; und
Bereitstellen der Datenstrukturen für den Anwendungsprozessor der Reihe nach auf der Grundlage der Zeitstempel der Daten.

13. Einrichtung nach Anspruch 12, wobei der Coprozessor konfiguriert ist, die Daten, die von den mehreren Sensoren empfangen werden, den Datenstrukturen, die ein Bildblockformat besitzen, zuzuordnen; und/oder
einer der mehreren Sensoren eine Trägheitsmesseinheit (IMU) umfasst, wobei der Coprozessor ferner konfiguriert ist zum
Bereitstellen von Daten, die von der IMU empfangen wurden, für den Anwendungsprozessor, bevor die Daten, die von den mehreren Sensoren empfangen wurden, den Datenstrukturen zugeordnet werden; und anschließend Bereitstellen der Datenstrukturen für den Anwendungsprozessor.

14. Einrichtung nach Anspruch 12, die ferner Folgendes umfasst:

einen ersten Bus für die Kommunikation zwischen dem Anwendungsprozessor und dem Coprozessor und einen zweiten Bus für die Kommunikation zwischen dem Coprozessor und den mehreren Sensoren, wobei der zweite Bus für eine Kommunikation konfiguriert ist, die eine geringere Latenz als die Kommunikation auf dem ersten Bus aufweist, wobei

der Coprozessor konfiguriert ist, Daten, die von einer Trägheitsmesseinheit (IMU) von den mehreren Sensoren empfangen wurden, über den zweiten Bus für den Anwendungsprozessor bereitzustellen und die Datenstrukturen über den ersten Bus für den Anwendungsprozessor bereitzustellen.

15. Verfahren, das durch eine Einrichtung ausgeführt wird, die einen Anwendungsprozessor, der konfiguriert ist, auf der Grundlage eines Betriebssystems zu arbeiten, und einen Coprozessor, der konfiguriert ist, Daten von mehreren Sensoren der Einrichtung zu empfangen, besitzt, wobei das Verfahren Folgendes umfasst:

Bestimmen einer Unterbrechung durch einen gegebenen Sensor der mehreren Sensoren der Einrichtung, wobei die Unterbrechung anzeigt, dass der gegebene Sensor Daten zum Ausgeben besitzt;
Bereitstellen eines Zeitstempels der Unterbrechung durch den gegebenen Sensor, der eine Zeit anzeigt, zu der der gegebene Sensor Daten zum Ausgeben besitzt, durch den Coprozessor;
Bereitstellen des Zeitstempels für den Anwendungsprozessor durch den Coprozessor;
Empfangen der Daten zum Ausgeben von dem gegebenen Sensor durch den Anwendungsprozessor;
Zuordnen des Zeitstempels der Unterbrechung durch den gegebenen Sensor zu den von dem gegebenen Sensor empfangenen Daten; und
Zuordnen von Daten, die von den mehreren Sensoren empfangen wurden, zu Datenstrukturen auf der Grundlage von Zeitstempeln der Daten, die durch den Coprozessor bereitgestellt werden.

## Revendications

1. Un procédé mis en oeuvre par un dispositif ayant un processeur d'application configuré pour fonctionner sur la base d'un système d'exploitation et un coprocesseur configuré pour recevoir des données en provenance d'une pluralité de capteurs du dispositif, le procédé comprenant :

le fait de déterminer une interruption par un capteur donné faisant partie de la pluralité de capteurs du dispositif, l'interruption étant indicative du fait que le capteur donné a des données à délivrer ;
le fait de fournir, par le coprocesseur, un horodatage de l'interruption par le capteur donné qui est indicatif d'un moment auquel le capteur donné a des données à transmettre ;
le fait de recevoir, par le coprocesseur, les données à transmettre provenant du capteur donné ;
le fait d'associer l'horodatage de l'interruption par le capteur donné au données reçues à partir du capteur donné ;
le fait d'associer les données reçues de la pluralité de capteurs dans des structures de données en fonction des horodatages des données fournies par le coprocesseur ; et
le fait de fournir, par le coprocesseur, les structures de données au processeur d'application en séquence en fonction des horodatages des données.

2. Le procédé selon la revendication 1, dans lequel les structures de données comprennent un format de trame d'image, et / ou
dans lequel un capteur faisant partie de la pluralité de capteurs comprend une unité de mesure inertielle (IMU), et dans lequel le procédé comprend en outre :

le fait de fournir, par le coprocesseur, des données reçues de l'IMU au processeur d'application avant d'associer ensemble les données reçues de la pluralité de capteurs dans les structures de données ; et
le fait de fournir ensuite les structures de données au processeur d'application.

3. Le procédé selon la revendication 1, dans lequel le dispositif comprend un premier bus pour la communication entre le processeur d'application et le coprocesseur, et un deuxième bus pour la communication entre le coprocesseur et la pluralité de capteurs, le deuxième bus étant configuré pour une communication ayant une latence inférieure à la communication sur le premier bus, et le procédé comprenant en outre :

le fait de fournir, par le coprocesseur, au processeur d'application, via le deuxième bus, des données reçues depuis une unité de mesure inertielle (IMU) faisant partie de la pluralité de capteurs ; et
le fait de fournir, par le coprocesseur, les structures de données au processeur d'application via le premier bus.

**4.** Le procédé selon la revendication 1, comprenant en outre le fait de recevoir des données précédentes pour une délivrance par le capteur donné en provenance d'une mémoire tampon du capteur donné en plus des données à délivrer depuis le capteur donné, les données précédentes étant des données redondantes reçues pour la correction d'erreur.

**5.** Le procédé selon la revendication 4, dans lequel le capteur donné est configuré pour délivrer des données à une première fréquence, et le procédé comprend en outre :

le fait d'associer ensemble, par le coprocesseur, des données reçues depuis la pluralité de capteurs en des structures de données à une deuxième fréquence, la première fréquence étant supérieure à la deuxième fréquence ; et
le fait de fournir, depuis la mémoire tampon du capteur donné, les données précédentes reçues pour la délivrance, dans les structures de données.

**6.** Le procédé selon la revendication 1, dans lequel la pluralité de capteurs du dispositif comprend de multiples caméras, et dans lequel le procédé comprend en outre :
le fait de fournir, par le coprocesseur, un signal de déclenchement à une caméra faisant partie des multiples caméras, le signal de déclenchement demandant une délivrance de données à la première caméra, le signal de déclenchement étant reçu par d'autres caméras faisant partie des multiples caméras, via la première caméra, de manière à provoquer la capture d'images en synchronie.

**7.** Le procédé selon la revendication 6, dans lequel la première caméra est une caméra à obturateur roulant et une deuxième caméra est une caméra à obturateur global, et le procédé comprend en outre :
le fait de fournir le signal de déclenchement à la deuxième caméra à environ un temps d'exposition de centre de la première caméra de manière à provoquer une exposition de la deuxième caméra à environ le temps d'exposition de centre de la première caméra.

**8.** Le procédé selon la revendication 1, dans lequel la pluralité de capteurs comprend une caméra rouge-vert-bleu (RGB) et un capteur infrarouge (IR), et dans lequel la caméra RVB est configurée pour délivrer des données à une première fréquence et le capteur IR est configuré pour délivrer des données à une deuxième fréquence inférieure à la première fréquence, et le procédé comprend en outre :

le fait d'entrelacer les données émises par le capteur IR dans les données fournies par la caméra RVB en fonction des horodatages des données respectives fournies par le coprocesseur ; ou
la pluralité de capteurs comprenant une unité de mesure inertielle (IMU), une caméra à obturateur global, une caméra à obturateur roulant, un projecteur de lumière structuré, une caméra de profondeur, un flash infrarouge, un baromètre, un magnétomètre et un capteur de température ; ou
la pluralité de capteurs comprenant trois caméras, une première caméra étant une caméra orientée vers l'avant, et une deuxième caméra et une troisième caméra sont chacune des caméras orientées vers l'arrière, la caméra orientée vers l'avant étant configurée pour capturer des images d'un premier point de vue du dispositif et les caméras orientées vers l'arrière sont configurées pour capturer des images d'un deuxième point de vue du dispositif qui est opposé au premier point de vue ; ou
le capteur donné comprenant un capteur GPS configuré pour délivrer des données indicatives d'un emplacement du dispositif et un horodatage de l'emplacement tel qu'il est reçu depuis l'entité de réseau, et le procédé comprenant en outre :
le fait d'associer l'emplacement et l'horodatage dans une structure de données donnée en fonction de l'horodatage de l'emplacement tel qu'il est reçu de l'entité de réseau.

**9.** Une mémoire lisible par ordinateur configurée pour stocker des instructions qui, lorsqu'elles sont exécutées par un dispositif ayant un processeur d'application configuré pour fonctionner sur un système d'exploitation et un coprocesseur configuré pour recevoir des données provenant d'une pluralité de capteurs du dispositif, amènent le dispositif à mettre en oeuvre le procédé selon l'une des revendications 1 à 8.

**10.** La mémoire lisible par ordinateur selon la revendication 9, dans laquelle les fonctions comprennent en outre :

le fait de recevoir, depuis une mémoire tampon du capteur donné, des données précédentes destinées à être délivrées par le capteur donné en plus des données à destinées à être délivrées depuis le capteur donné, les données précédentes étant des données redondantes reçues pour une correction d'erreur ; et

le fait d'associer ensemble, par le coprocesseur, les données précédentes destinées à être délivrées, reçues depuis le tampon du capteur donné, dans les structures de données.

11. La mémoire lisible par ordinateur selon la revendication 9, dans laquelle la pluralité de capteurs du dispositif comprend une caméra à obturateur roulant et une caméra à obturateur global, et les fonctions comprennent en outre :

le fait de fournir, par le coprocesseur, à l'obturateur roulant la caméra, un signal de déclenchement à environ un temps d'exposition de centre de la caméra à obturateur roulant, le signal de déclenchement demandant une délivrance de données à partir de la caméra à obturateur roulant,
le signal de déclenchement étant reçu par la caméra à obturateur global via la caméra à obturateur roulant de manière à provoquer la capture d'images par la caméra à obturateur roulant et la caméra à obturateur global à environ le temps d'exposition de centre de la caméra à obturateur roulant.

12. Un dispositif comprenant :

un processeur d'application configuré pour fonctionner sur la base d'un système d'exploitation ;
une pluralité de capteurs ; et
un coprocesseur configuré pour recevoir des données en provenance de la pluralité de capteurs, le coprocesseur étant configuré pour exécuter des fonctions comprenant :

le fait de déterminer une interruption par un capteur donné faisant partie de la pluralité de capteurs, l'interruption étant indicative du fait que le capteur donné a des données à délivrer ;
le fait de fournir un horodatage de l'interruption par le capteur donné qui est indicatif du moment auquel le capteur donné a des données à délivrer ;
le fait de recevoir les données à délivrer en provenance du capteur donné ;
le fait d'associer l'horodatage de l'interruption par le capteur donné avec les données reçues depuis le capteur donné ;
le fait d'associer des données reçues depuis la pluralité de capteurs en des structures de données en fonction des horodatages des données telles que fournies par le coprocesseur ; et
le fait de fournir les structures de données au processeur d'application en séquence en fonction des horodatages des données.

13. Le dispositif selon la revendication 12, dans lequel le coprocesseur est configuré pour associer ensemble les données reçues depuis la pluralité de capteurs dans les structures de données ayant un format de trame d'image ; et / ou dans lequel un capteur faisant partie de la pluralité de capteurs comprend une unité de mesure inertielle (IMU), et dans lequel le coprocesseur est en outre configuré pour :
fournir des données reçues de l'IMU au processeur d'application avant d'associer ensemble les données reçues depuis la pluralité de capteurs dans les structures de données ; et fournir ensuite les structures de données au processeur d'application.

14. Le dispositif selon la revendication 12, comprenant en outre :

un premier bus pour la communication entre le processeur d'application et le coprocesseur ; et
un deuxième bus pour la communication entre le coprocesseur et la pluralité de capteurs, le deuxième bus étant configuré pour une communication ayant une latence inférieure à la communication sur le premier bus, et le coprocesseur étant configuré pour fournir, au processeur d'application, via le deuxième bus, des données reçues d'une unité de mesure inertielle (IMU) faisant partie de la pluralité de capteurs et pour fournir les structures de données au processeur d'application via le premier bus.

15. Un procédé mis en oeuvre par un dispositif ayant un processeur d'application configuré pour fonctionner sur la base d'un système d'exploitation et un coprocesseur configuré pour recevoir des données en provenance d'une pluralité de capteurs du dispositif, le procédé comprenant :

le fait de déterminer une interruption par un capteur donné faisant partie de la pluralité de capteurs du dispositif, l'interruption étant indicative du fait que le capteur donné a des données à délivrer ;
le fait de fournir, par le coprocesseur, un horodatage de l'interruption par le capteur donné qui est indicative du moment auquel le capteur donné a des données à délivrer ;
le fait de fournir, par le coprocesseur, l'horodatage au processeur d'application ;

le fait de recevoir, par le processeur d'application, depuis le capteur donné, les données à délivrer ;

le fait d'associer l'horodatage de l'interruption par le capteur donné aux données reçues depuis le capteur donné ; et

le fait d'associer les données reçues depuis la pluralité de capteurs dans des structures de données en fonction des horodatages des données fournis par le coprocesseur.

**FIG. 1**

FIG. 2

EP 3 090 354 B1

304 306                    300

302

🛜 📶 🔋 8:20 AM

**FIG. 3A**

300

310 ▢

308

314 ●

312 ◑

**FIG. 3B**

400

START

DETERMINING AN INTERRUPT BY A GIVEN SENSOR OF A PLURALITY OF SENSORS OF THE DEVICE
402

PROVIDING, BY THE CO-PROCESSOR, A TIMESTAMP OF THE INTERRUPT BY THE GIVEN SENSOR THAT IS INDICATIVE OF A TIME THAT THE GIVEN SENSOR HAS DATA FOR OUTPUT
404

RECEIVING, BY THE CO-PROCESSOR, THE DATA FOR OUTPUT FROM THE GIVEN SENSOR
406

ASSOCIATING THE TIMESTAMP OF THE INTERRUPT BY THE GIVEN SENSOR WITH THE RECEIVED DATA FROM THE GIVEN SENSOR
408

ASSOCIATING TOGETHER DATA RECEIVED FROM THE PLURALITY OF SENSORS INTO DATA STRUCTURES BASED ON TIMESTAMPS OF THE DATA AS PROVIDED BY THE CO-PROCESSOR
410

PROVIDING, BY THE CO-PROCESSOR, THE DATA STRUCTURES TO THE APPLICATION PROCESSOR IN SEQUENCE BASED ON THE TIMESTAMPS OF THE DATA
412

END

FIG. 4

# FIG. 5A

FIG. 5B

FIG. 6

RS FREQUENCY (30 Hz)

RS EXPOSURE TIME

GS EXPOSURE TIME

CENTERS OF GS/RS EXPOSURES ARE ALIGNED

GS TRIGGER TIME = RS EXPOSURE START TIME + 0.5 RS EXPOSURE TIME − 0.5 GS EXPOSURE TIME

RS EXPOSURE

GS EXPOSURE

CO-PROCESSOR TIME AXIS

IMU DATA TIME AXIS

IMU DATA PACKED IN FRAME 1

IMU DATA PACKED IN FRAME 2

EACH IMU DATA PACKET IS TIMESTAMPED W.R.T. CO-PROCESSOR TIME AXIS ON DATA READY INTERRUPT

IMU DATA OUTPUT

EP 3 090 354 B1

**EP 3 090 354 B1**

## REFERENCES CITED IN THE DESCRIPTION

**Patent documents cited in the description**

- US 5600576 A